(19) Europäisches Patentamt
European Patent Office
Office européen des brevets

(11) **EP 4 517 854 A1**

(12) **EUROPEAN PATENT APPLICATION**
published in accordance with Art. 153(4) EPC

(43) Date of publication:
**05.03.2025 Bulletin 2025/10**

(21) Application number: **22949785.4**

(22) Date of filing: **06.07.2022**

(51) International Patent Classification (IPC):
**H01M 4/13** (2010.01)    **H01M 10/0525** (2010.01)

(52) Cooperative Patent Classification (CPC):
**H01M 4/13; H01M 10/0525**

(86) International application number:
**PCT/CN2022/104156**

(87) International publication number:
**WO 2024/007198 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
• **XU, Xiaofu**
  **Ningde, Fujian 352100 (CN)**
• **LUO, Chenxu**
  **Ningde, Fujian 352100 (CN)**
• **HE, Jianfu**
  **Ningde, Fujian 352100 (CN)**
• **SUN, Jingxuan**
  **Ningde, Fujian 352100 (CN)**
• **LIU, Qian**
  **Ningde, Fujian 352100 (CN)**
• **YE, Yonghuang**
  **Ningde, Fujian 352100 (CN)**

(74) Representative: **Gong, Jinping**
**CocreateIP**
**Neumarkterstr. 21**
**81673 München (DE)**

(54) **POSITIVE ELECTRODE SHEET, SECONDARY BATTERY, AND ELECTRICAL DEVICE**

(57)    This application provides a positive electrode plate, a secondary battery, and an electrical device. The positive electrode plate may be a positive electrode plate applicable to a jelly-roll cell, and includes a waist region close to a waist and an end region far away from the waist. The waist region includes a first positive electrode film, and the end region includes a second positive electrode film. The positive electrode plate may be a positive electrode plate applicable to a stacked type cell, and includes a center region close to a center and an edge region far away from the center. The center region includes a first positive electrode film, and the edge region includes a second positive electrode film.

FIG. 1

EP 4 517 854 A1

**Description**

**TECHNICAL FIELD**

This application relates to the field of battery technology, and in particular, to a positive electrode plate, a secondary battery, and an electrical device.

**BACKGROUND**

**In** recent years, secondary batteries have been applied wider in many fields, including energy storage power systems such as hydro, thermal, wind, and solar power stations, and other fields such as electric tools, electric bicycles, electric motorcycles, and electric vehicles, military equipment, and aerospace. The significant development of the secondary batteries gives rise to higher requirements on the energy density, cycle performance, and the like of the batteries.

**In** the related art, lithium/sodium supplementation is performed to compensate for irreversible loss of sodium occurring during a first charge-and-discharge cycle in a lithium/sodium-ion battery.

**SUMMARY**

The inventor hereof finds that, for a jelly-roll cell, the temperature at the waist of the cell is higher than that at the end of the cell during operation. For a stacked type cell, the temperature at a center region of the cell is higher than that at an edge region of the cell during operation. A high-temperature region exhibits higher electrochemical activity than a low-temperature region. In the region with a higher electrochemical activity, lithium ions are consumed at a higher rate, and a positive electrode material is damaged irreversibly to a higher degree.

In view of the above problems, this application provides a novel positive electrode plate, a secondary battery, and an electrical device, which are described below.

A first aspect of this application provides a positive electrode plate applicable to a jelly-roll cell. The positive electrode plate includes a waist region close to a waist and an end region far away from the waist.

The waist region includes a first positive electrode film, and the end region includes a second positive electrode film.

A porosity of the first positive electrode film is greater than a porosity of the second positive electrode film.

When the positive electrode plate based on the above technical solution is used in a secondary battery, the secondary battery exhibits one or more improved performance indicators such as cycle life.

A second aspect of this application provides a positive electrode plate applicable to a stacked type cell. The positive electrode plate includes a center region close to a center and an edge region far away from the center.

The center region includes a first positive electrode film, and the edge region includes a second positive electrode film.

A porosity of the first positive electrode film is greater than a porosity of the second positive electrode film.

When the positive electrode plate based on the above technical solution is used in a secondary battery, the secondary battery exhibits one or more improved performance indicators such as cycle life.

In some embodiments, a ratio of the porosity of the first positive electrode film to the porosity of the second positive electrode film is (1.003 to 3): 1.

In some embodiments, a first alkali metal ion donating material and/or a second alkali metal ion donating material is distributed in the first positive electrode film. The first alkali metal ion donating material possesses an irreversible capacity, and the second alkali metal ion donating material possesses a reversible capacity. In the first positive electrode film, the first alkali metal ion donating material donates $P_1$ ppm alkali metal ions, and the second alkali metal ion donating material donates $Q_1$ ppm alkali metal ions.

A first alkali metal ion donating material and/or a second alkali metal ion donating material is distributed in the second positive electrode film, the first alkali metal ion donating material possesses an irreversible capacity, the second alkali metal ion donating material possesses a reversible capacity, and, in the second positive electrode film, the first alkali metal ion donating material provides $P_2$ ppm alkali metal ions, and the second alkali metal ion donating material provides $Q_2$ ppm alkali metal ions; and

The first positive electrode film and the second positive electrode film satisfy the following relationship:

$$(P_1 + Q_1) > (P_2 + Q_2),$$

where

$$P_1 > 0, P_2 \geq 0, Q_1 > 0, Q_2 > 0.$$

In some embodiments, the first positive electrode film and the second positive electrode film satisfy the following relationship: $(P_1/Q_1) > (P_2/Q_2)$.

In some embodiments, the positive electrode plate is characterized by one or more of the following features:

(1) a value of $(P_1/Q_1)$ is 0.1% to 70%;
(2) a value of $(P_2/Q_2)$ is 0 to 70%; and
(3) a value of $(P_1/Q_1)$ - $(P_2/Q_2)$ is 0.1% to 60%.

In some embodiments, the positive electrode plate is characterized by one or more of the following features:

$$(1)\ P_1 + Q_1 = 40000\ \text{ppm to } 180000\ \text{ppm};$$

$$(2)\ P_2 + Q_2 = 40000\ \text{ppm to } 180000\ \text{ppm};$$

and

$$(3)\ (P_1 + Q_1): (P_2 + Q_2) = (1.001\ \text{to } 2): 1.$$

In some embodiments, the positive electrode plate is characterized by one or more of the following features:

(1) the waist region is a strip-shaped region distributed along a length direction of the positive electrode plate;
(2) the end region is a strip-shaped region distributed along the length direction of the positive electrode plate;
(3) a width of the waist region is 0.05D to 0.95D, and D is a total width of an active material region on the positive electrode plate;
(4) a width of the end region is 0.05D to 0.95D, and D is the total width of the active material region on the positive electrode plate;
(5) a total area of the waist region accounts for 5% to 95%, and optionally 50% to 95%, of a total area of the active material region on the positive electrode plate; and
(6) a total area of the end region accounts for 5% to 95%, and optionally 5% to 50%, of the total area of the active material region on the positive electrode plate.

In some embodiments, the positive electrode plate is characterized by one or more of the following features:

(1) the center region is a circle, ellipse, polygon, or a similar figure that, in each case, is centered on a center of the positive electrode plate;
(2) the edge region is an annular region distributed along an edge of the positive electrode plate;
(3) a total area of the center region accounts for 5% to 95%, and optionally 50% to 95%, of a total area of the active material region on the positive electrode plate; and
(4) a total area of the edge region accounts for 5% to 95%, and optionally 5% to 50%, of the total area of the active material region on the positive electrode plate.

In some embodiments, the first alkali metal ion donating material includes one or more of: an alkali metal nitride, an alkali metal oxide, a composite of an alkali metal oxide and a transition metal, an alkali metal peroxide, an excessively alkali-metalized alkali metal oxide, or an alkali metal oxycarbide.

In some embodiments, the positive electrode plate is characterized by one or more of the following features:

(1) the alkali metal nitride is $A_3N$;
(2) the alkali metal oxide is $A_2O$;
(3) the composite of an alkali metal oxide and a transition metal is $A_2O/M$;
(4) the alkali metal peroxide is $A_2O_2$;
(5) the excessively alkali-metalized alkali metal oxide is $A_2NiO_2$ or $A_5FeO_4$; and
(6) the alkali metal oxycarbide is selected from $A_2C_2O_4$, $A_2C_4O_4$, $A_2C_3O_5$, or $A_2C_4O_6$, where

A is an alkali metal element; and
M is a transition metal element.

In some embodiments, the second alkali metal ion donating material includes one or more of:

(1) an alkali-metal-ion active material of a layered structure for a secondary battery;
(2) an alkali-metal-ion active material of an olivine structure for a secondary battery;
(3) an alkali-metal-ion active material of a spinel structure for a secondary battery; or
(4) a Prussian blue alkali-metal-ion active material for a secondary battery.

In some embodiments, the alkali metal is selected from lithium, sodium, or a combination thereof.

In some embodiments, the positive electrode plate includes a waist region and two end regions. The waist region is located between the two end regions. The waist region includes a first positive electrode film. Each of the two end regions includes a second positive electrode film.

According to a second aspect, this application provides a secondary battery, including the positive electrode plate according to any one of the embodiments described above.

According to a third aspect, this application provides an electrical device, including the secondary battery.

This application brings at least the following beneficial effects.

One or more embodiments of this application achieve one or more of the following benefits:

(1) When the positive electrode plate is used in a secondary battery, the battery exhibits an improved cycle life; and
(2) The porosity in the waist region of the positive electrode plate is relatively high, and the growth of the expansion force is relatively slow.

## BRIEF DESCRIPTION OF DRAWINGS

FIG. 1 is a schematic diagram of a positive electrode plate according to an embodiment of this application;
FIG. 2 is a schematic diagram of a jelly-roll cell according to an embodiment of this application;
FIG. 3 is a schematic diagram of a positive electrode plate according to another embodiment of this application;
FIG. 4 is a schematic diagram of a stacked type cell according to an embodiment of this application;
FIG. 5 is a schematic diagram of a secondary battery according to an embodiment of this application;
FIG. 6 is an exploded view of a secondary battery shown in FIG. 5 according to an embodiment of this application;
FIG. 7 is a schematic diagram of a battery module according to an embodiment of this application;
FIG. 8 is a schematic diagram of a battery pack according to an embodiment of this application;
FIG. 9 is an exploded view of the battery pack shown in FIG. 8 according to an embodiment of this application; and
FIG. 10 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. top cap assembly; 100. jelly-roll cell; 200. stacked type cell; 11. positive electrode plate; 12. negative electrode plate; 13. separator; 500. waist; 501. first end; 502. second end; 101. waist region; 201. first end region; 202. second end region; 600. center; 601. center region; 602. edge region.

## DETAILED DESCRIPTION OF EMBODIMENTS

The following describes and discloses in detail a negative active material and a preparation method thereof, a positive electrode plate, a negative electrode plate, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B" : A is true (or existent) and B is false (or absent); A is false (or absent) and B is true (or existent); and, both A and B are true (or existent).

[Secondary battery]

A secondary battery, also known as a rechargeable battery or storage battery, is a battery that is reusable after an active material in the battery is activated by charging the battery that has been discharged.

Generally, a secondary battery includes a positive electrode plate, a negative electrode plate, a separator, and an electrolytic solution. During charge and discharge of the battery, active ions (such as lithium ions) are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate while allowing passage of active ions. The electrolytic solution is located between the positive electrode plate and the negative electrode plate, and primarily serves to conduct the active ions.

**[Negative electrode plate]**

The negative electrode plate includes a negative current collector and a negative electrode film disposed on at least one surface of the negative current collector. The negative electrode film includes a negative active material. The negative active material is the negative active material according to any one of the embodiments of this application.

As an example, the negative current collector includes two surfaces opposite to each other in a thickness direction of the negative current collector. The negative electrode film is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative electrode film further optionally includes a binder. As an example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film further optionally includes a conductive agent. As an example, the conductive agent may be at least one selected from superconductive carbon, acetylene black, carbon black, Ketjen black, carbon dots, carbon nanotubes, graphene, or carbon nanofibers.

In some embodiments, the negative electrode film further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold calendering to obtain the negative electrode plate.

**[Positive electrode plate]**

A first aspect of this application provides a positive electrode plate applicable to a jelly-roll cell. The positive electrode plate includes a waist region close to a waist and an end region far away from the waist.

The waist region includes a first positive electrode film, and the end region includes a second positive electrode film.

A porosity of the first positive electrode film is greater than a porosity of the second positive electrode film.

When the positive electrode plate based on the above technical solution is used in a secondary battery, the secondary battery exhibits one or more improved performance indicators such as cycle life.

Without being limited by any theory, the theoretical basis for the positive electrode plate to improve the cycle life of a battery are as follows:

When the cell is working, the expansion degree at the waist region of the cell is greater than the expansion degree at the end region. Consequently, the waist region is squeezed to a higher degree by the battery shell than the end region, and therefore, the return flowability of the electrolyte solution at the waist region is weaker. In addition, the long-term squeezed state deteriorates the porosity of the negative electrode. After the porosity of the negative electrode plate compacted in a long term is reduced, the negative electrode plate is insufficiently infiltrated by the electrolyte solution, and the lithium intercalation kinetics of the negative electrode are worsened. Lithium plating is prone to occur at the center region in the middle and late stages of cycling and lead to failure. Therefore, by adjusting the porosity at the waist region of the positive electrode plate to make the porosity of the waist be greater than the porosity of the end region, this application can reserve a space for withstanding compression, and in turn, alleviate a series of adverse effects mentioned above caused by compression of the waist region.

In some embodiments, the term "waist" is a midpoint of the positive electrode plate applicable to a jelly-roll cell in a winding axis direction. Along the winding axis direction, the waist position is equidistant from the two end positions of the winding axis. The waist region may be symmetrical about the waist.

In some embodiments, closeness to the waist means that the waist region is closer to the waist than the end regions. The waist region may abut or encompass the waist.

In some embodiments, farness from the waist means that the end region is farther away from the waist than the waist region.

In some embodiments, the area of the waist region may be 10% to 90%, for example, 20% to 80%, 30% to 70%, 40% to 60%, or 50%, of the area of the positive electrode plate. In some embodiments, the area of the end region may be 10% to 90%, for example, 20% to 80%, 30% to 70%, 40% to 60%, or 50%, of the area of the positive electrode plate.

In some embodiments, the end region includes a first end region and a second end region. The area of the first end region may be 5% to 45%, for example, 10% to 40%, 20% to 30%, or 25%, of the area of the positive electrode plate. The area of the second end region may be 5% to 45%, for example, 10% to 40%, 20% to 30%, or 25%, of the area of the positive electrode plate.

A second aspect of this application provides a positive electrode plate applicable to a stacked type cell. The positive electrode plate includes a center region close to a center and an edge region far away from the center.

The center region includes a first positive electrode film, and the edge region includes a second positive electrode film.

A porosity of the first positive electrode film is greater than a porosity of the second positive electrode film.

When the positive electrode plate based on the above technical solution is used in a secondary battery, the secondary battery exhibits one or more improved performance indicators such as cycle life.

Without being limited by any theory, the theoretical basis for the positive electrode plate to improve the cycle life of a battery are as follows:

When the cell is working, the expansion degree at the center region of the cell is greater than the expansion degree at the edge region. Consequently, the center region is squeezed to a higher degree by the battery shell than the edge region, and therefore, the return flowability of the electrolyte solution at the center region is weaker. In addition, the long-term squeezed state deteriorates the porosity of the negative electrode. After the porosity of the negative electrode plate compacted in a long term is reduced, the negative electrode plate is insufficiently infiltrated by the electrolyte solution, and the lithium intercalation kinetics of the negative electrode are worsened. Lithium plating is prone to occur at the center region in the middle and late stages of cycling and lead to failure. Therefore, by adjusting the porosity at the center region of the positive electrode plate to make the porosity of the waist be greater than the porosities of the first end region and the second edge region, this application can reserve a space for withstanding compression, and in turn, alleviate a series of adverse effects mentioned above caused by compression of the center region.

In some embodiments, the positive electrode film with pores is obtained in the following way: adding a decomposable material (such as an alkali metal oxycarbide) to a positive electrode film, and then decomposing (such as liquefying or gasifying) the decomposable material under specified conditions, so that pores are generated *in-situ* on the positive electrode film after the decomposable material is decomposed, where *"in-situ"* means an original position at which the decomposable material is disposed. Optionally, the decomposable material releases a gas (for example, $CO_2$) during the decomposition. The released gas increases the size and number of pores. By disposing decomposable materials with different contents/constituents in the first positive electrode film and the second positive electrode film separately, different voids can be formed in the first positive electrode film and the second positive electrode film, so that the porosity of the first positive electrode film is greater than the porosity of the second positive electrode film.

In some embodiments, the alkali metal oxycarbide is selected from $A_2C_2O_4$, $A_2C_4O_4$, $A_2C_3O_5$, or $A_2C_4O_6$. The element A is selected from Li, Na, K, or any combination thereof.

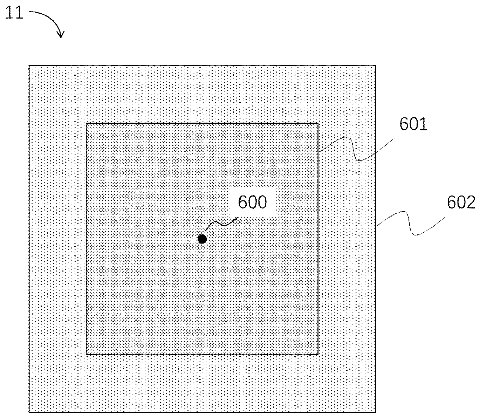

FIG. 3 is a schematic diagram of a positive electrode plate according to this embodiment. The shape of the positive electrode plate 11 is quadrilateral. Along the machine direction and the transverse direction of the positive electrode plate 11, the positive electrode plate includes a center region 601 close to the center 600 and an edge region 602 far away from the center 600. The edge region 602 is located outside the center region 601. The shape of the center region 601 is quadrilateral. The edge region 602 extends around the center region 601 for one circle.

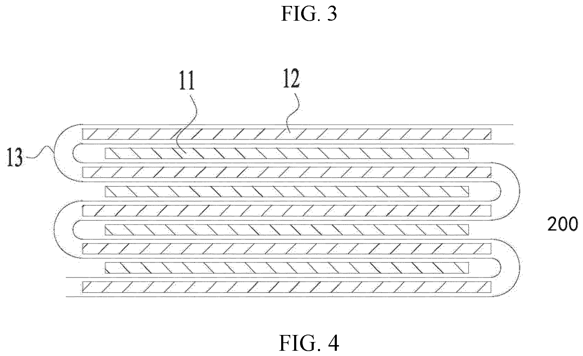

FIG. 4 is a schematic diagram of a stacked type cell according to this embodiment. The stacked type cell 200 assumes a stacked structure. Specifically, the stacked type cell 200 includes a plurality of positive electrode plates 11 and a plurality of negative electrode plates 12. The positive electrode plates 11 and the negative electrode plates 12 are alternately stacked. A separator 13 is located between a positive electrode plate 11 and a negative electrode plate 12. In the stacked structure, both the positive electrode plate 11 and the negative electrode plate 12 are sheet-shaped. The stacking direction of the positive electrode plate 11 and the negative electrode plate 12 is parallel to a thickness direction of the positive electrode plate 11 and a thickness direction of the negative electrode plate 12.

In some embodiments, the term "center" is a geometric center of the positive electrode plate applicable to the stacked type cell. The center region may have the same shape and geometric center as the positive electrode plate. The area of the center region may be 10% to 90%, for example, 20% to 80%, 30% to 70%, 40% to 60%, or 50%, of the area of the positive electrode plate. The area of the edge region may be 10% to 90%, for example, 20% to 80%, 30% to 70%, 40% to 60%, or 50%, of the area of the positive electrode plate.

In some embodiments, closeness to the center means that the center region is closer to the center than the edge region. The center region may abut or encompass the center.

In some embodiments, farness from the center means that the edge region is farther away from the center than the center region.

In some embodiments, the "first alkali metal ion donating material" exhibits a first-cycle Coulombic efficiency of 20% or less (for example, 15% or less, 10% or less, 5% or less, 1% or less), and possesses an irreversible capacity.

In some embodiments, the "second alkali metal ion donating material" exhibits a first-cycle Coulombic efficiency of 80% or more (for example, 85% or more, 90% or more, 95% or more, 99% or more), and possesses a reversible capacity.

In some embodiments, the first alkali metal ion donating material and/or the second alkali metal ion donating material is distributed in the first positive electrode film and the second positive electrode film separately. The first alkali metal ion donating material in the first positive electrode film may be identical to or different from the first alkali metal ion donating material in the second positive electrode film. The second alkali metal ion donating material in the first positive electrode film may be identical to or different from the second alkali metal ion donating material in the second positive electrode film.

In some embodiments, the term "first-cycle Coulombic efficiency" means initial Coulombic efficiency (Initial Coulombic Efficiency, ICE). The first-cycle Coulombic efficiency of the first alkali metal ion donating material and the second alkali metal ion donating material may be tested with reference to a conventional method or standard in the art. For example, a battery (such as a half battery) is assembled by using the sample material as a positive active material. A first-cycle delithiation capacity $C_1$ and a first-cycle lithium lithiation capacity $C_2$ of the sample material are measured, and then the first-cycle Coulombic efficiency is calculated as: first-cycle Coulombic efficiency = $C_2/C_1 \times 100\%$.

In some embodiments, a porosity of the first positive electrode film is greater than a porosity of the second positive electrode film. When the positive electrode plate based on the above technical solution is used in a secondary battery, the secondary battery exhibits one or more improved performance indicators such as cycle life.

In some embodiments, a ratio of the porosity of the first positive electrode film to the porosity of the second positive electrode film is (1.003 to 3): 1. When the positive electrode plate based on the above technical solution is used in a secondary battery, the secondary battery exhibits one or more improved performance indicators such as cycle life.

In some embodiments, a ratio of the porosity of the first positive electrode film to the porosity of the second positive electrode film is (1.003 to 1.01): 1, (1.01 to 1.1): 1, (1.1 to 1.2): 1, (1.2 to 1.3): 1, (1.3 to 1.4): 1, (1.4 to 1.5): 1, (1.5 to 1.6): 1, (1.6 to 1.7): 1, (1.7 to 1.8): 1, (1.8 to 1.9): 1, (1.9 to 2): 1, (2 to 2.1): 1, (2.1 to 2.2): 1, (2.2 to 2.3): 1, (2.3 to 2.4): 1, (2.4 to 2.5): 1, (2.5 to 2.6): 1, (2.6 to 2.7): 1, (2.7 to 2.8): 1, (2.8 to 2.9): 1, or (2.9 to 3): 1.

In some embodiments, a first alkali metal ion donating material and/or a second alkali metal ion donating material is distributed in the first positive electrode film. The first alkali metal ion donating material possesses an irreversible capacity, and the second alkali metal ion donating material possesses a reversible capacity. In the first positive electrode film, the first alkali metal ion donating material donates $P_1$ ppm alkali metal ions, and the second alkali metal ion donating material donates $Q_1$ ppm alkali metal ions.

A first alkali metal ion donating material and/or a second alkali metal ion donating material is distributed in the second positive electrode film, the first alkali metal ion donating material possesses an irreversible capacity, the second alkali metal ion donating material possesses a reversible capacity, and, in the second positive electrode film, the first alkali metal ion donating material provides $P_2$ ppm alkali metal ions, and the second alkali metal ion donating material provides $Q_2$ ppm alkali metal ions.

The first positive electrode film and the second positive electrode film satisfy the following relationship:

$$(P_1 + Q_1) > (P_2 + Q_2),$$

where

$$P_1 > 0, \ P_2 \geq 0, \ Q_1 > 0, \ Q_2 > 0.$$

Without being limited by any theory, the reasons for the improved cycle life of the battery are analyzed as follows: When the positive electrode plate based on the above technical solution is used in a secondary battery, the secondary battery exhibits an improved cycle life. Without being limited by any theory, the reasons for the improved cycle life of the battery are analyzed as follows:
The value of $(P_1+Q_1)$ in the first positive electrode film is relatively large. Because the first positive electrode film is located in the waist region (or center region) with a relatively high temperature and a relatively high electrochemical activity, the relatively large $(P_1+Q_1)$ value can make up for the capacity loss caused by insufficiency of reversible alkali metal ions arising from a too fast consumption rate of the alkali metal ions in the waist region (or center region), and increase the overall cycle life of the cell.

The value of $(P_2+Q_2)$ in the second positive electrode film is relatively small. Because the second positive electrode film is located in the end region (or edge region) with a relatively low temperature and a relatively low electrochemical activity, the relatively small $(P_2+Q_2)$ value reduces the overall cost and avoids the risk of a short circuit caused by metal dendrites on the negative electrode arising from excessive alkali metal ions.

In some embodiments, the first positive electrode film and the second positive electrode film satisfy the following relationship: $(P_1/Q_1) > (P_2/Q_2)$.

The first alkali metal ion donating material and/or the second alkali metal ion donating material play different roles during operation of the battery. The alkali metal ions donated by the first alkali metal ion donating material are used for compensating for the consumption of the alkali metal ions during the lifespan of the battery, for example, the consumption in an initial film-forming reaction, and the consumption in a reparative film-forming reaction during cycling/storage. The alkali metal ions donated by the second alkali metal ion donating material is used for reversible deintercalation/electrochemical reaction in the positive and negative electrode materials. Because the inherent film-forming consumption is compensated for by the first alkali metal ions, more reversible alkali metal ions are available for providing electrochemical energy.

The value of $(P_1/Q_1)$ in the first positive electrode film is relatively large. Because the first positive electrode film is located in the waist region with a relatively high temperature and a relatively high electrochemical activity, the relatively large $(P_1/Q_1)$ value can make up for the capacity loss caused by insufficiency of reversible alkali metal ions arising from a too fast consumption rate of the alkali metal ions in the waist region, and increase the overall cycle life of the cell.

The value of $(P_2/Q_2)$ in the second positive electrode film is relatively small. Because the second positive electrode film is located in the end region with a relatively low temperature and a relatively low electrochemical activity, the relatively small $(P_2/Q_2)$ value reduces the overall cost and avoids the risk of a short circuit caused by metal dendrites on the negative electrode arising from excessive alkali metal ions.

In some embodiments, the positive electrode plate is characterized by one or more of the following features:

(1) a value of $(P_1/Q_1)$ is 0.1% to 70%;
(2) a value of $(P_2/Q_2)$ is 0 to 70%; and

(3) a value of $(P_1/Q_1)$ - $(P_2/Q_2)$ is 0.1% to 70%.

In some embodiments, the value of $(P_1/Q_1)$ is 0.1% to 1%, 1% to 5%, 5% to 10%, 10% to 15%, 15% to 20%, 20% to 25%, 25% to 30%, 30% to 35%, 35% to 40%, 40% to 45%, 45% to 50%, 50% to 55%, 55% to 60%, 60% to 65%, or 65% to 70%.

In some embodiments, the value of $(P_2/Q_2)$ is 0% to 0.1%, 0.1% to 1%, 1% to 5%, 5% to 10%, 10% to 15%, 15% to 20%, 20% to 25%, 25% to 30%, 30% to 35%, 35% to 40%, 40% to 45%, 45% to 50%, 50% to 55%, 55% to 60%, 60% to 65%, or 65% to 70%.

In some embodiments, the value of $(P_1/Q_1)$-$(P_2/Q_2)$ is 0.1% to 1%, 1% to 5%, 5% to 10%, 10% to 15%, 15% to 20%, 20% to 25%, 25% to 30%, 30% to 35%, 35% to 40%, 40% to 45%, 45% to 50%, 50% to 55%, 55% to 60%, 60% to 65%, or 65% to 70%.

In some embodiments, the positive electrode plate is characterized by one or more of the following features:

(1) a value of $(P_1/Q_1)$ is 10% to 30%;
(2) a value of $(P_2/Q_2)$ is 0 to 10%; and
(3) a value of $(P_1/Q_1)$ - $(P_2/Q_2)$ is 10% to 36%.

In some embodiments, the positive electrode plate is characterized by one or more of the following features:

$$(1)\ P_1 + Q_1 = 40000\ ppm\ to\ 180000\ ppm;$$

$$(2)\ P_2 + Q_2 = 40000\ ppm\ to\ 180000\ ppm;$$

and

$$(3)\ (P_1 + Q_1): (P_2 + Q_2) = (1.001\ to\ 2):\ 1.$$

In some embodiments, the value of $P_1+Q_1$ is 40000 to 41000 ppm, 41000 to 45000 ppm, 40000 to 50000 ppm, 50000 to 60000 ppm, 60000 to 70000 ppm, 70000 to 80000 ppm, 80000 to 90000 ppm, 90000 to 100000 ppm, 100000 to 110000 ppm, 110000 to 120000 ppm, 120000 to 130000 ppm, 130000 to 140000 ppm, 140000 to 150000 ppm, 150000 to 160000 ppm, 160000 to 170000 ppm, 170000 to 180000 ppm, 175000 to 18000 ppm, or 179000 to 18000 ppm.

In some embodiments, the value of $P_2+Q_2$ is 40000 to 41000 ppm, 41000 to 45000 ppm, 40000 to 50000 ppm, 50000 to 60000 ppm, 60000 to 70000 ppm, 70000 to 80000 ppm, 80000 to 90000 ppm, 90000 to 100000 ppm, 100000 to 110000 ppm, 110000 to 120000 ppm, 120000 to 130000 ppm, 130000 to 140000 ppm, 140000 to 150000 ppm, 150000 to 160000 ppm, 160000 to 170000 ppm, 170000 to 180000 ppm, 175000 to 18000 ppm, or 179000 to 18000 ppm.

In some embodiments, the value of $(P_1 + Q_1): (P_2 + Q_2)$ is (1.001 to 1.01): 1, (1.01 to 1.02): 1, (1.02 to 1.03): 1, (1.03 to 1.04): 1, (1.04 to 1.05): 1, (1.01 to 1.1): 1, (1.1 to 1.2): 1, (1.2 to 1.3): 1, (1.3 to 1.4): 1, (1.4 to 1.5): 1, (1.5 to 1.6): 1, (1.6 to 1.7): 1, (1.7 to 1.8): 1, (1.8 to 1.9): 1, or (1.9 to 2): 1.

In some embodiments, the positive electrode plate is characterized by one or more of the following features:

(1) the waist region is a strip-shaped region distributed along a length direction of the positive electrode plate;
(2) the end region is a strip-shaped region distributed along the length direction of the positive electrode plate;
(3) a width of the waist region is 0.05D to 0.95D, and D is a total width of an active material region on the positive electrode plate;
(4) a width of the end region is 0.05D to 0.95D, and D is the total width of the active material region on the positive electrode plate;
(5) a total area of the waist region accounts for 5% to 95%, and optionally 50% to 95%, of a total area of the active material region on the positive electrode plate; and
(6) a total area of the end region accounts for 5% to 95%, and optionally 5% to 50%, of the total area of the active material region on the positive electrode plate.

In some embodiments, the term "active material region" means a region provided (for example, coated) with an active material on the positive electrode plate. The positive electrode plate may further include a tab region. The tab region is a region not provided with an active material.

In some embodiments, the width of the waist region is 0.05D to 0.15D, 0.15D to 0.25D, 0.25D to 0.35D, 0.35D to 0.45D, 0.45D to 0.55D, 0.55D to 0.65D, 0.65D to 0.75D, 0.75D to 0.85D, or 0.85D to 0.95D.

In some embodiments, the width of the end region is 0.05D to 0.15D, 0.15D to 0.25D, 0.25D to 0.35D, 0.35D to 0.45D, 0.45D to 0.55D, 0.55D to 0.65D, 0.65D to 0.75D, 0.75D to 0.85D, or 0.85D to 0.95D.

In some embodiments, the total area of the waist region accounts for 5% to 15%, 15% to 25%, 25% to 35%, 35% to 45%, 45% to 55%, 55% to 65%, 65% to 75%, 75% to 85%, or 85% to 95% of the total area of the active material region on the positive electrode plate.

In some embodiments, the total area of the end region accounts for 5% to 15%, 15% to 25%, 25% to 35%, 35% to 45%, 45% to 55%, 55% to 65%, 65% to 75%, 75% to 85%, or 85% to 95% of the total area of the active material region on the positive electrode plate.

In some embodiments, the positive electrode plate is characterized by one or more of the following features:

(1) the center region is a circle, ellipse, polygon, or a similar figure that, in each case, is centered on a center of the positive electrode plate;
(2) the edge region is an annular region distributed along an edge of the positive electrode plate;
(3) a total area of the center region accounts for 5% to 95%, and optionally 50% to 95%, of a total area of the active material region on the positive electrode plate; and
(4) a total area of the edge region accounts for 5% to 95%, and optionally 5% to 50%, of the total area of the active material region on the positive electrode plate.

In some embodiments, the total area of the center region accounts for 5% to 15%, 15% to 25%, 25% to 35%, 35% to 45%, 45% to 55%, 55% to 65%, 65% to 75%, 75% to 85%, or 85% to 95% of the total area of the active material region on the positive electrode plate.

In some embodiments, the total area of the edge region accounts for 5% to 15%, 15% to 25%, 25% to 35%, 35% to 45%, 45% to 55%, 55% to 65%, 65% to 75%, 75% to 85%, or 85% to 95% of the total area of the active material region on the positive electrode plate.

In some embodiments, a part or all (for example, 50% to 100% by area, 70% to 100% by area, or 90% to 100% by area) of the waist region is covered by the first positive electrode film.

In some embodiments, a part or all (for example, 50% to 100% by area, 70% to 100% by area, or 90% to 100% by area) of the end region is covered by the second positive electrode film.

In some embodiments, a part or all (for example, 50% to 100% by area, 70% to 100% by area, or 90% to 100% by area) of the center region is covered by the first positive electrode film.

In some embodiments, a part or all (for example, 50% to 100% by area, 70% to 100% by area, or 90% to 100% by area) of the edge region is covered by the second positive electrode film.

In some embodiments, the first positive electrode film and the second positive electrode film possess substantially the same areal density, and an areal density ratio between the first positive electrode film and the second positive electrode film is, for example, (0.8 to 1.2): 1, (0.9 to 1.1): 1, or 1: 1.

In some embodiments, the first alkali metal ion donating material includes one or more of: an alkali metal nitride, an alkali metal oxide, a composite of an alkali metal oxide and a transition metal, an alkali metal peroxide, an excessively alkali-metalized alkali metal oxide, or an alkali metal oxycarbide.

In some embodiments, the positive electrode plate is characterized by one or more of the following features:

(1) the alkali metal nitride is $A_3N$;
(2) the alkali metal oxide is $A_2O$;
(3) the composite of an alkali metal oxide and a transition metal is $A_2O/M$;
(4) the alkali metal peroxide is $A_2O_2$;
(5) the excessively alkali-metalized alkali metal oxide is $A_2NiO_2$ or $A_5FeO_4$; and
(6) the alkali metal oxycarbide is selected from $A_2C_2O_4$, $A_2C_4O_4$, $A_2C_3O_5$, or $A_2C_4O_6$, where

A is an alkali metal element; and
M is a transition metal element.

In some embodiments, the second alkali metal ion donating material includes one or more of:

(1) an alkali-metal-ion active material of a layered structure for a secondary battery;
(2) an alkali-metal-ion active material of an olivine structure for a secondary battery;
(3) an alkali-metal-ion active material of a spinel structure for a secondary battery; or
(4) a Prussian blue alkali-metal-ion active material for a secondary battery.

In some embodiments, the alkali metal is selected from lithium, sodium, or a combination thereof.

In some embodiments, the positive electrode plate includes a waist region and two end regions. The waist region is located between the two end regions. The waist region includes a first positive electrode film. Each of the two end regions includes a second positive electrode film.

In some embodiments, the positive electrode plate of this application is obtained by disposing a positive electrode film with different constituents in each different region of the positive electrode plate.

In some embodiments, the positive electrode plate includes a first positive electrode film and a second positive electrode film. The first positive electrode film and the second positive electrode film are located in different regions of the positive electrode plate without overlapping each other. The first positive electrode film and the second positive electrode film each independently contain a first alkali metal ion donating material and/or a second alkali metal ion donating material. The constituents of the first positive electrode film are different from the constituents of the second positive electrode film.

In some embodiments, the positive electrode plate generally includes a positive current collector and a positive electrode film disposed on at least one surface of the positive current collector. The positive electrode film includes a positive active material (also referred to as "alkali metal ion donating material").

As an example, the positive current collector includes two surfaces opposite to each other in a thickness direction of the positive current collector. The positive electrode film is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}Co_{1/5}Mn_{1/3}O_2$ (briefly referred to as NCM333), $LiNi_{0.5}Co_{0.2}Mn_{0.3}O_2$ (briefly referred to as NCM523), $LiNi_{0.5}Co_{0.25}Mn_{0.25}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811)), lithium nickel cobalt aluminum oxide (such as $LiNi_{0.85}Co_{0.15}Al_{0.05}O_2$), or a modified compound thereof. Examples of the olivine-structured lithium-containing phosphate may include, but without being limited to, at least one of lithium iron phosphate (such as $LiFePO_4$ (briefly referred to as LFP)), a composite of lithium iron phosphate and carbon, lithium manganese phosphate (such as $LiMnPO_4$), a composite of lithium manganese phosphate and carbon, lithium manganese iron phosphate, or a composite of lithium manganese iron phosphate and carbon.

In some embodiments, the positive electrode film further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive slurry, coating a positive current collector with the positive slurry, and performing steps such as drying and cold calendering to obtain the positive electrode plate.

[Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is in a liquid state and includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. As an example, the additive may include a negative film-forming additive or a positive film-forming additive. The additive may further include an additive capable of improving some performance of the battery, for example, an additive for improving overcharge performance of the battery, or an additive for improving high- or low-temperature performance of the battery.

[Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

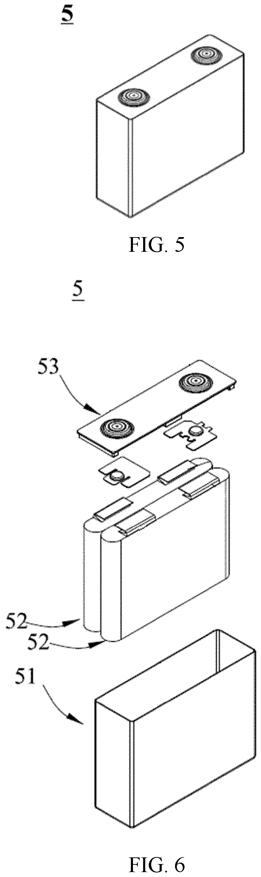

The shape of the secondary battery is not particularly limited in this application, and may be cylindrical, prismatic or any other shape. FIG. 5 shows a prismatic secondary battery 5 as an example.

In some embodiments, referring to FIG. 6, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

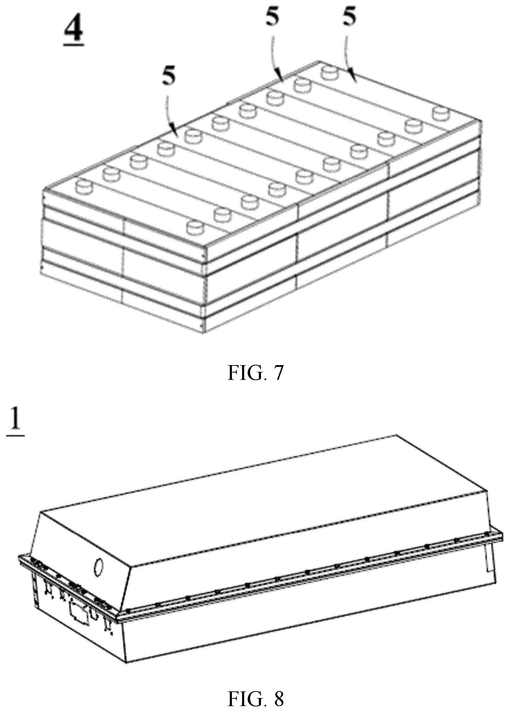

FIG. 7 shows a battery module 4 as an example. Referring to FIG. 7, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

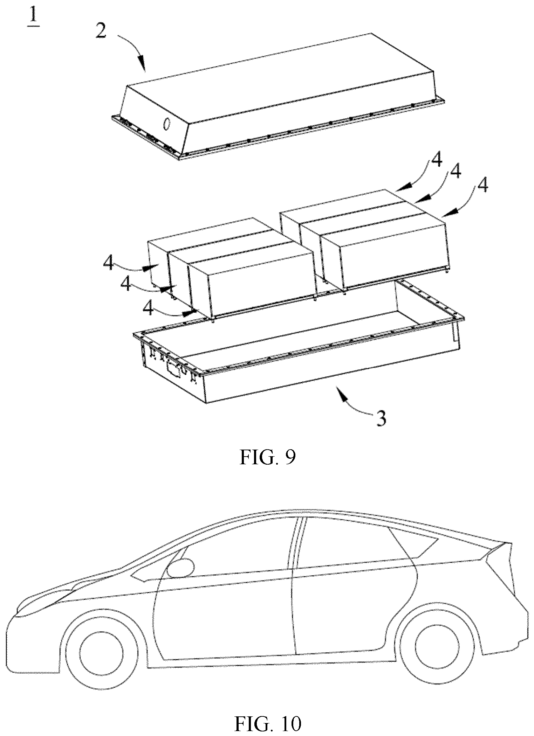

FIG. 8 and FIG. 9 show a battery pack 1 as an example. Referring to FIG. 8 and FIG. 9, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 10 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

The first alkali metal ion donating materials in all the embodiments and comparative embodiments described above exhibit a first-cycle Coulombic efficiency of 20% or less, and possess an irreversible capacity.

The second alkali metal ion donating materials in all the embodiments and comparative embodiments described above exhibit a first-cycle Coulombic efficiency of 80% or more, and possess a reversible capacity.

**Embodiment 1**

**Preparing a lithium-ion battery**

1.1 Preparing a positive electrode plate

First positive active slurry: Mixing well a first alkali metal ion donating material (in this embodiment, $Li_2C_4O_4$), a second alkali metal ion donating material (in this embodiment, NCM523), a conductive agent acetylene black, and a binder polyvinylidene difluoride (PVDF) at a mass ratio of 0.1%: 95.9%: 2%: 2%, and adding the mixture to an NMP solvent to form a first positive active slurry.

Second positive active slurry: Mixing well a first alkali metal ion donating material (in this embodiment, $Li_2C_4O_4$), a second alkali metal ion donating material (in this embodiment, NCM523), a conductive agent acetylene black (SP), and a binder polyvinylidene difluoride (PVDF) at a mass ratio of 0%: 96%: 2%: 2%, and adding the mixture to an NMP solvent to form a second positive active slurry.

Providing a positive current collector (aluminum foil) applicable to a jelly-roll cell, where the positive current collector is strip-shaped and has dimensions of a width direction and a length direction. In a subsequent process of preparing a cell, the width direction of the positive current collector is used as a winding axis, and the length of the positive current collector is wound around the winding axis to form a jelly-roll cell. Along the machine direction of the positive current collector, the positive current collector includes a first end region, a waist region, and a second end region that extend along the length direction of the positive electrode plate. The waist region is located between the first end region and the second end region. The widths of the first end region, the waist region, and the second end region are 0.25D, 0.5D, and 0.25D respectively, where D is the total width of the active material region (a region coated with an active slurry) on the positive current collector, and D = 80 mm.

On one side of the positive current collector, the waist region is coated with a first positive active slurry, and the first end region and the second end region are coated with a second positive active slurry. Subsequently, the current collector is dried at 85 °C and then cold-pressed. The above operations are repeated on the other side of the positive current collector.

Finally, the current collector is die-cut and slit to obtain a positive electrode plate applicable to a jelly-roll cell in a lithium-ion battery.

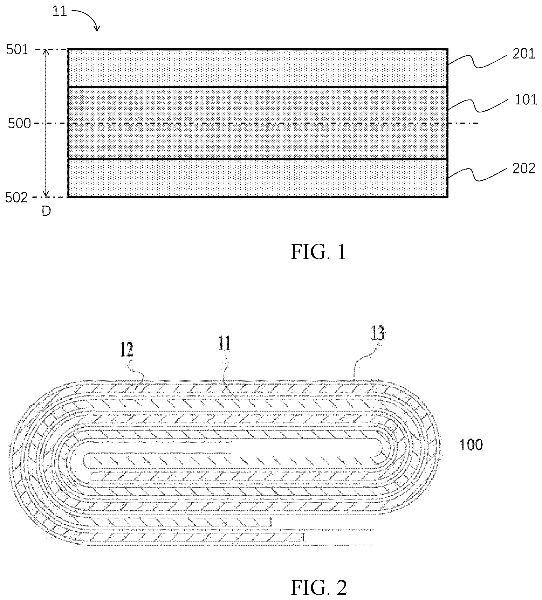

FIG. 1 is a schematic diagram of a positive electrode plate applicable to a jelly-roll cell according to Embodiment 1. Along the width direction of the positive electrode plate 11, the positive electrode plate 11 includes a first end 501, a waist 500, and a second end 502. Along the machine direction, the positive electrode plate 11 includes a first end region 201, a waist region 101, and a second end region 202 that extend along the length direction of the positive electrode plate 11. The waist region 101 is located between the first end region 201 and the second end region 202. The waist region 101 is closer to the waist 500 than the first end region 201. The first end region 201 is farther away from the waist 500 than the waist region 101, and is closer to the first end 501. The waist region 101 is closer to the waist 500 than the second end region 202. The second end region 202 is farther away from the waist 500 than the waist region 201, and is closer to the second end 502. The waist region 101 includes a first positive electrode film. The first end region 201 and the second end region 201 each include a second positive electrode film.

The widths of the first end region 201, the waist region 101, and the second end region 202 are 0.25D, 0.5D, and 0.25D respectively, where D is the total width of the active material region on the positive electrode plate 11.

The first positive electrode film is disposed in the waist region 101 of the positive electrode plate. A first alkali metal ion donating material and a second alkali metal ion donating material are distributed in the first positive electrode film (this region is of a first activity, and is also referred to as the first positive electrode film hereinafter). The first alkali metal ion donating material possesses an irreversible capacity. The second alkali metal ion donating material possesses a reversible capacity. In the first positive electrode film, the first alkali metal ion donating material donates $P_1$ ppm alkali metal ions, and the second alkali metal ion donating material donates $Q_1$ ppm alkali metal ions;

The first end region 201 and the second end region 202 of the positive electrode plate each include the second positive electrode film. A second alkali metal ion donating material is distributed in the second positive electrode film (this region is of a second activity, and is also referred to as the second positive electrode film hereinafter). The first alkali metal ion donating material possesses an irreversible capacity. The second alkali metal ion donating material possesses a reversible capacity. In the second positive electrode film, the first alkali metal ion donating material donates $P_2$ ppm alkali metal ions, and the second alkali metal ion donating material donates $Q_2$ ppm alkali metal ions.

The constituents of the first positive electrode film and the second positive electrode film are shown in Table 1. A sum $(P_1+Q_1)$ and a ratio $(P_1/Q_1)$ of $P_1$ and $Q_1$, a sum $(P_2+Q_2)$ and a ratio $(P_2/Q_2)$ of $P_2$ and $Q_2$, and the value of $(P_1+Q_1)/(P_2+Q_2)$ are shown in Table 1.

1.2 Preparing a negative electrode plate

Adding graphite as a negative active material, acetylene black as a conductive agent, sodium carboxymethyl cellulose (CMC) as a thickener, and styrene butadiene rubber (SBR) as a binder into a water solvent at a mass ratio of 96: 2: 1: 1, and mixing evenly to make a negative slurry. Coating a copper foil as a negative current collector with the negative slurry evenly, drying the copper foil at 85 °C, and cold-calendering it to make a negative electrode plate of the lithium-ion battery.

1.3 Preparing a separator

Using a polyethylene microporous film as a porous separator substrate, mixing inorganic alumina powder, polyvinylpyrrolidone, and an acetone solvent evenly at a mass ratio of 3: 1.5: 5.5 to form a slurry, coating one side of the substrate with the slurry, and drying the substrate to obtain a separator. The coated side of the separator is oriented toward the positive electrode plate subsequently.

1.4 Preparing an electrolyte solution

Dissolving lithium hexafluorophosphate in a mixed solvent of ethylene carbonate, dimethyl carbonate, and ethyl methyl carbonate (the dosage of the lithium hexafluorophosphate is 1 mol/L, and a volume ratio between the ethylene carbonate, the dimethyl carbonate, and the ethyl methyl carbonate is 1: 2: 1) to obtain an electrolyte solution of the lithium-ion battery.

1.5 Assembling a lithium-ion battery

Winding the positive electrode plate, the negative electrode plate, and the separator to obtain a jelly-roll cell.

As shown in FIG. 2, the jelly-roll cell 100 includes a positive electrode plate 11, a negative electrode plate 12, and a separator 13 that separates the positive electrode plate 11 from the negative electrode plate 12. The jelly-roll cell 100 assumes a jelly-roll structure. The positive electrode plate 11, the negative electrode plate 12, and the separator 13 are all ribbon-shaped. Stacking the positive electrode plate 11, the separator 13, and the negative electrode plate 12 sequentially, and then winding the stacked structure for at least two coils to form a jelly-roll cell 100, where the jelly-roll cell 100 is flat-shaped.

Packaging the jelly-roll cell in a battery housing, and performing steps such as electrolyte injection, chemical formation, and degassing to obtain the battery for use in the embodiment. The rated capacity of the battery is 200 Ah, and dimensions of the battery housing are 60 mm × 200 mm × 100 mm.

**Embodiments 2 to 10**

Embodiments 2 to 10 differ from Embodiment 1 in that the mass percent of the first alkali metal ion donating material ($Li_2C_4O_4$) and the mass percent of the second alkali metal ion donating material (NCM523) in the first positive electrode film are different from those in Embodiment 1, as detailed in Table 1.

**Comparative Embodiment 1**

Comparative Embodiment 1 differs from Embodiment 1 in the constituents of the first positive electrode film. Specifically, the mass percent of the first alkali metal ion donating material ($Li_2C_4O_4$) in the first positive electrode film in Comparative Embodiment 1 is 0.0 wt%, as detailed in Table 1.

**Embodiments 11A to 11B and Comparative Embodiments 2A to 2B**

Embodiments 11A to 11B and Comparative Embodiments 2A to 2B differ from Embodiment 6 in the constituents of the first positive electrode film and the second positive electrode film. Specifically, the type of the second alkali metal ion donating material is different from that in Embodiment 6, as detailed in Table 2.

**Embodiments 12 to 19**

Embodiments 12 to 29 differ from Embodiment 6 in the constituents of the first positive electrode film and the second positive electrode film. Specifically, the type of the first alkali metal ion donating material is different from that in Embodiment 6, as detailed in Table 3.

**Embodiments 20 to 21**

Embodiments 20 to 21 differ from Embodiment 6 in the constituents of the second positive electrode film. Specifically, the mass percent of the first alkali metal ion donating material ($Li_2C_4O_4$) and the mass percent of the second alkali metal ion donating material (NCM523) in the first positive electrode film are different from those in Embodiment 6, as detailed in Table 4.

**Comparative Embodiments 3A to 3C**

Comparative Embodiment 3A differs from Embodiment 2 in the constituents of the first positive electrode film. Specifically, the lithium-rich material $Li_2MnO_3 \cdot 0.15(LiNi_{0.33}Co_{0.33}Mn_{0.33}O_2)$ is used to replace the first alkali metal ion donating material ($Li_2C_4O_4$), as detailed in Table 5.
Comparative Embodiment 3B differs from Embodiment 5 in the constituents of the first positive electrode film. Specifically, the lithium-rich material $Li_2MnO_3 \cdot 0.15(LiNi_{0.33}Co_{0.33}Mn_{0.33}O_2)$ is used to replace the first alkali metal ion donating material ($Li_2C_4O_4$), as detailed in Table 5.
Comparative Embodiment 3C differs from Embodiment 6 in the constituents of the first positive electrode film. Specifically, the lithium-rich material $Li_2MnO_3 \cdot 0.15(LiNi_{0.33}Co_{0.33}Mn_{0.33}O_2)$ is used to replace the first alkali metal ion donating material ($Li_2C_4O_4$), as detailed in Table 5.
The first-cycle Coulombic efficiency of the lithium-rich material is 90% or more. The lithium-rich material in the first positive electrode film donates $P^*_1$ ppm alkali metal ions, and the lithium-rich material in the second positive electrode film donates $P^*_2$ ppm alkali metal ions.

**Analysis and Test**

1. Testing the porosity of positive electrode plate
The positive electrode plates in each embodiment and each comparative embodiment were tested with a true density meter (model: AccuPyc II 1340) with reference to GB/T 24586-2009.

(1) Test principle: The true volume of the sample material was measured precisely by using a displacement method of an inert gas (helium) with a small molecular diameter in conjunction with the Archimedes' principle and the Bohr's law (PV = nRT), so as to obtain the porosity of the sample.
(2) Calculation formula: Apparent volume $V_2 = S \times H \times A$; porosity $\alpha = (V_2-V_1)/V_2 \times 100\%$

In the formula: S-area of the sample, in $cm^2$; H-thickness of the sample, in cm; A-number of samples, EA; $V_1$-true volume of the sample, in $cm^3$; $V_2$-apparent volume of the sample, in $cm^3$; $\alpha$-porosity of the sample, %.
Table 1 to Table 5 show the porosities of the waist region and the end region of the positive electrode plate in each embodiment and each comparative embodiment.

2. Testing the battery life

Charge and discharge process (the rated capacity is 200 Ah; the potential range used in the cycle life test in a test case of the present invention is adjustable depending on the system characteristics, such as a $V_0$ to $V_1$ voltage range of 2.8 V to 4.3 V in a $LiNi_{0.5}Co_{0.2}Mn_{0.3}$ system, a voltage range of 2.5 V to 3.65 V in a $LiFePO_4$ system, or a voltage range of 2.5 V to 4.3 V in a $LiFe_{0.4}Mn_{0.6}PO_4$ system):

The test temperature is 25 °C, and the cycle process is as follows:

1) Leave the battery to stand for 10 minutes;
2) Discharge the battery at 0.33 C until the voltage reaches a cut-off voltage $V_0$;
3) Leave the battery to stand for 10 minutes;
4) Charge the battery at a constant current of 0.33 C until the voltage reaches a target voltage $V_1$, continue to charge the battery at a constant voltage until the current I is less than or equal to 0.05 C;
5) Leave the battery to stand for 10 minutes;
6) Discharge the battery at 0.33 C until the voltage reaches a cut-off voltage $V_0$ (record the discharge capacity in the 2nd-time discharge as $C_0$);
7) Leave the battery to stand for 10 minutes;
8) Perform steps 4) to 7) cyclically, and record the discharge capacity $C_m$ in each cycle.
9) Stop the test when $C_m/C_0$ is less than or equal to 80%, and record the number of cycles.

The cycle life of the battery in each embodiment and each comparative embodiment is shown in Table 1 to Table 5.

3. Information on distribution of substances on the positive electrode plate

The following provides an exemplary detection method to detect the distribution of the first alkali metal ion donating material and the second alkali metal ion donating material on the positive electrode plate:

(1) Provide a positive electrode plate sample;
(2) Split the positive electrode plate sample into a plurality of sample cells in a lattice, and record the position information of each sample cell. For example, for a positive electrode plate of 100 mm × 1000 mm in size, if the size of a lattice cell is set to 5 mm × 5 mm, the positive electrode plate can be divided into 4000 sample cells; and
(3) Detect the physicochemical parameters of each sample cell;

The physicochemical parameters include, but are not limited to:

(a) Constituent elements

The constituent elements may be detected with reference to a general method in the art. An exemplary detection method is to test the element content by using an iCAP 7400 inductively coupled plasma emission spectrometer with reference to the standard EPA 6010D-2014, in which the solvent is aqua regia.

The element content is calculated as: element content (mass fraction w/w%) = element mass/(mass of weighed sample - mass of current collector) × 100%.

Based on the concentration of the alkali metal element of each sample cell, a sum of $P_1$ and $Q_1$ (ppm) can be determined, where $P_1$ is the content of the alkali metal ions donated by the first alkali metal ion donating material and $Q_1$ is the content of the alkali metal ions donated by the second alkali metal ion donating material in the first positive electrode film in the waist region and the end region; and a sum of $P_2$ and $Q_2$ (ppm) can be determined, where $P_2$ is the content of the alkali metal ions donated by the first alkali metal ion donating material and $Q_2$ is the content of the alkali metal ions donated by the second alkali metal ion donating material in the second positive electrode film in the waist region and the end region.

**Table 1**

| | Constituents of first positive electrode film (wt%) | | | | Constituents of second positive electrode film (wt%) | | | | $P_1/Q_1$ | $P_2/Q_2$ | $P_1+Q_1$ (ppm) | $P_2+Q_2$ (pp m) | $(P_1+Q_1)/(P_2+Q_2)$ | $\alpha_1$ (%) | $\alpha_2$ (%) | $\alpha_1:\alpha_2$ | Cycle life (cls) |
|---|---|---|---|---|---|---|---|---|---|---|---|---|---|---|---|---|---|
| | NCM523 | $Li_2C_4O_4$ | SP | PVDF | NCM523 | $Li_2C_4O_4$ | SP | PVDF | | | | | | | | | |
| Comparative Embodiment 1 | 96.0 % | 0.0 % | 2% | 2% | 96.0 % | 0.0 % | 2% | 2% | 0.0 % | 0 % | 98140 | 98 14 0 | 1.0 00 | 32. 1% | 32. 1% | 1.0 00 | 1500 |
| Embodiment 1 | 95.9 % | 0.1 % | 2% | 2% | 96.0 % | 0.0 % | 2% | 2% | 0.2 % | 0 % | 98242 | 98 14 0 | 1.0 01 | 32. 2% | 32. 1% | 1.0 03 | 1514 |
| Embodiment 2 | 95.0 % | 1.0 % | 2% | 2% | 96.0 % | 0.0 % | 2% | 2% | 2.2 % | 0 % | 99169 | 98 14 0 | 1.0 10 | 33. 2% | 32. 1% | 1.0 33 | 1640 |
| Embodiment 3 | 94.1 % | 1.9 % | 2% | 2% | 96.0 % | 0.0 % | 2% | 2% | 4.3 % | 0 % | 100218 | 98 14 0 | 1.0 21 | 34. 2% | 32. 1% | 1.0 66 | 1782 |
| Embodiment 4 | 93.1 % | 2.9 % | 2% | 2% | 96.0 % | 0.0 % | 2% | 2% | 6.4 % | 0 % | 101288 | 98 14 0 | 1.0 32 | 35. 3% | 32. 1% | 1.0 99 | 1928 |
| Embodiment 5 | 91.2 % | 4.8 % | 2% | 2% | 96.0 % | 0.0 % | 2% | 2% | 10. 4% | 0 % | 103493 | 98 14 0 | 1.0 55 | 37. 4% | 32. 1% | 1.1 64 | 2088 |
| Embodiment 6 | 86.4 % | 9.6 % | 2% | 2% | 96.0 % | 0.0 % | 2% | 2% | 19. 7% | 0 % | 109413 | 98 14 0 | 1.1 15 | 42. 4% | 32. 1% | 1.3 22 | 2215 |
| Embodiment 7 | 76.8 % | 19.2 % | 2% | 2% | 96.0 % | 0.0 % | 2% | 2% | 35. 6% | 0 % | 123365 | 98 14 0 | 1.2 57 | **51. 9%** | 32. 1% | 1.6 19 | 2412 |
| Embodiment 8 | 67.2 % | 28.8 % | 2% | 2% | 96.0 % | 0.0 % | 2% | 2% | 48. 7% | 0 % | 141079 | 98 14 0 | 1.4 38 | 60. 6% | 32. 1% | **1.8** 90 | 2068 |
| Embodiment 9 | 57.6 % | 38.4 % | 2% | 2% | 96.0 % | 0.0 % | 2% | 2% | 59. 6% | 0 % | 164314 | 98 14 0 | 1.6 74 | 68. 5% | 32. 1% | 2.1 35 | 1559 |
| Embodiment 10 | 48.0 % | 48.0 % | 2% | 2% | 96.0 % | 0.0 % | 2% | 2% | 68. 9% | 0 % | 196128 | 98 14 0 | 1.9 98 | 75. 6% | 32. 1% | 2.3 54 | 1517 |
| *NCM523 means $LiNi_{0.5}Co_{0.2}Mn_{0.3}$ | | | | | | | | | | | | | | | | | |

**Table 2**

| | Constituents of first positive electrode film (wt%) | | | | Constituents of second positive electrode film (wt%) | | | | $P_1/Q_1$ | $P_2/Q_2$ | $P_1+Q_1$ (ppm) | $(P_2+Q_2)$ (ppm) | $(P_1+Q_1)/(P_2+Q_2)$ | $\alpha_1$ (%) | $\alpha_2$ (%) | $\alpha_1:\alpha_2$ | Cycle life (cls) |
|---|---|---|---|---|---|---|---|---|---|---|---|---|---|---|---|---|---|
| Comp arative Embo diment 2A | $LiFePO_4$ | $Li_2C_4O_4$ | SP | PVDF | $LiFePO_4$ | $Li_2C_4O_4$ | SP | PVDF | 0.0 % | 0% | 4223 1 | 42231 | 1.000 | 34.9 % | 34. 9% | 1.0 00 | 3000 |
| | 96% | 0.0% | 2% | 2% | 96% | 0.0 % | 2% | 2% | | | | | | | | | |
| Embo diment 11A | $LiFePO_4$ | $Li_2C_4O_4$ | SP | PVDF | $LiFePO_4$ | $Li_2C_4O_4$ | SP | PVDF | 29. 7% | 0% | 5375 2 | 42231 | 1.273 | 44.1 % | 34. 9% | 1.2 64 | 4742 |
| | 86.4 % | 9.6% | 2% | 2% | 96% | 0.0 % | 2% | 2% | | | | | | | | | |
| Comp arative Embo diment 2B | LFMP | $Li_2C_4O_4$ | SP | PVDF | LFMP | $Li_2C_4O_4$ | SP | PVDF | 0.0 % | 0% | 4237 8 | 42378 | 1.000 | 34.0 % | 34. 0% | 1.0 00 | 2000 |
| | 96% | 0.0% | 2% | 2% | 96% | 0.0 % | 2% | 2% | | | | | | | | | |
| Embo diment 11B | LFMP | $Li_2C_4O_4$ | SP | PVDF | LFMP | $Li_2C_4O_4$ | SP | PVDF | 29. 7% | 0% | 5389 8 | 42378 | 1.272 | 43.3 % | 34. 0% | 1.2 75 | 3880 |
| | 86.4 % | 9.6% | 2% | 2% | 96% | 0.0 % | 2% | 2% | | | | | | | | | |
| *LFMP means $LiFe_{0.4}Mn_{0.6}PO_4$ | | | | | | | | | | | | | | | | | |

Table 3

| | Constituents of first positive electrode film (wt%) | | | | Constituents of second positive electrode film (wt%) | | | | $P_1/Q_1$ | $P_2/Q_2$ | $P_1+Q_1$ (ppm) | $(P_2+Q_2)$ (ppm) | $(P_1+Q_1)/(P_2+Q_2)$ | $\alpha_1$ (%) | $\alpha_2$ (%) | $\alpha_1:\alpha_2$ | Cycle life (cls) |
|---|---|---|---|---|---|---|---|---|---|---|---|---|---|---|---|---|---|
| Embodiment 12 | NCM 523 | $Li_2C_2O_4$ | S P | PV DF | NCM 523 | $Li_2C_2O_4$ | S P | PV DF | 23.0% | 0% | 112173 | 981 40 | 1.14 3 | 42.1% | 32.1% | 1.3 11 | 1906 |
| | 86.4% | 9.6% | 2 % | 2% | 96% | 0.0% | 2 % | 2% | | | | | | | | | |
| Embodiment 13 | NCM 523 | $Li_2C_3O_5$ | S P | PV DF | NCM 523 | $Li_2C_3O_5$ | S P | PV DF | 19.6% | 0% | 109058 | 981 40 | 1.11 1 | 42.2% | 32.1% | 1.3 15 | 2196 |
| | 86.4% | 9.6% | 2 % | 2% | 96% | 0.0% | 2 % | 2% | | | | | | | | | |
| Embodiment 14 | NCM 523 | $Li_2C_4O_6$ | S P | PV DF | NCM 523 | $Li_2C_4O_6$ | S P | PV DF | 16.4% | 0% | 107041 | 981 40 | 1.09 1 | 42.7% | 32.1% | 1.3 30 | 2207 |
| | 86.4% | 9.6% | 2 % | 2% | 96% | 0.0% | 2 % | 2% | | | | | | | | | |
| Embodiment 15 | NCM 523 | $Li_3N$ | S P | PV DF | NCM 523 | $Li_3N$ | S P | PV DF | 43.9% | 0% | 161210 | 981 40 | 1.64 3 | 42.8% | 32.1% | 1.3 33 | 2410 |
| | 86.4% | 9.6% | 2 % | 2% | 96% | 0.0% | 2 % | 2% | | | | | | | | | |
| Embodiment 16 | NCM 523 | $Li_2O/Co$ | S P | PV DF | NCM 523 | $Li_2O/Co$ | S P | PV DF | 28.8% | 0% | 114304 | 981 40 | 1.16 5 | **41.**6% | 32.1% | 1.2 96 | 2182 |
| | 86.4% | 9.6% | 2 % | 2% | 96% | 0.0% | 2 % | 2% | | | | | | | | | |
| Embodiment 17 | NCM 523 | $Li_2O\,2$ | S P | PV DF | NCM 523 | $Li_2O\,2$ | S P | PV DF | 35.8% | 0% | 129841 | 981 40 | 1.32 3 | 42.8% | 32.1% | 1.3 33 | 2210 |
| | 86.4% | 9.6% | 2 % | 2% | 96% | 0.0% | 2 % | 2% | | | | | | | | | |
| Embodiment 18 | NCM 523 | $Li_2Ni_2O_2$ | S P | PV DF | NCM 523 | $Li_2Ni_2O_2$ | S P | PV DF | 16.0% | 0% | 111809 | 981 40 | 1.13 9 | 32.5% | 32.1% | 1.0 13 | 1910 |
| | 86.4% | 9.6% | 2 % | 2% | 96% | 0.0% | 2 % | 2% | | | | | | | | | |

EP 4 517 854 A1

19

(continued)

| | Constituents of first positive electrode film (wt%) | | | | Constituents of second positive electrode film (wt%) | | | | $P_1/Q_1$ | $P_2/Q_2$ | $P_1+Q_1$ (ppm) | $(P_2+Q_2)$ (ppm) | $(P_1+Q_1)/(P_2+Q_2)$ | $\alpha_1$ (%) | $\alpha_2$ (%) | $\alpha_1:\alpha_2$ | Cycle life (cls) |
|---|---|---|---|---|---|---|---|---|---|---|---|---|---|---|---|---|---|
| | NCM 523 | $Li_5FeO_4$ | S P | PV DF | NCM 523 | $Li_5FeO_4$ | S P | PV DF | 23. 8% | 0% | 121547 | 981 40 | 1.23 9 | 32. 5% | 32. 1% | 1.0 12 | 1948 |
| Embodiment 19 | 86.4 % | 9.6% | 2 % | 2% | 96% | 0.0% | 2 % | 2% | | | | | | | | | |

**Table 4**

| | Constituents of first positive electrode film (wt%) | | | | Constituents of second positive electrode film (wt%) | | | | $P_1/Q_1$ | $P_2/Q_2$ | $P_1+Q_1$ (ppm) | $P_2+Q_2$ (ppm) | $(P_1+Q_1)/(P_2+Q_2)$ | $\alpha_1$ (%) | $\alpha_2$ (%) | $\alpha_1 : \alpha_2$ | Cycle life (cls) |
|---|---|---|---|---|---|---|---|---|---|---|---|---|---|---|---|---|---|
| | NCM 523 | $Li_2C_4O_4$ | S P | PVDF | NCM 523 | $Li_2C_4O_4$ | S P | PVDF | | | | | | | | | |
| Embodiment 20 | 86.4 % | 9.6 % | 2 % | 2% | 95.0 % | 1.0 % | 2 % | 2% | 19.7% | 2.0 % | 109413 | 991 69 | 1.10 3 | 42.4% | 33.2% | 1.2 80 | 2292 |
| Embodiment 21 | 86.4 % | 9.6 % | 2 % | 2% | 93.1 % | 2.9 % | 2 % | 2% | 19.7% | 6.4 % | 109413 | 101 288 | 1.08 0 | 42.4% | 35.3% | 1.2 03 | 2405 |

EP 4 517 854 A1

**Table 5**

| | Constituents of first positive electrode film (wt%) | | | | Constituents of second positive electrode film (wt%) | | | | $P*_1/Q_1$ | $P*_2/Q_2$ | $P*_1+Q_1$ (ppm) | $P*_2+Q_2$ (ppm) | $(P*_1+Q_1)$ $/(P*_2+Q_2)$ | $\alpha_1$ (%) | $\alpha_2$ (%) | $\alpha_1 : \alpha_2$ | Cycle life (cls) |
|---|---|---|---|---|---|---|---|---|---|---|---|---|---|---|---|---|---|
| | NCM523 | Lithium-rich material | SP | PVDF | NCM523 | Lithium-rich material | SP | PVDF | | | | | | | | | |
| Comparative Embodiment 3A | 95% | 1.0% | 2% | 2% | 96.0% | 0.0% | 2% | 2% | 1.4% | 0% | 99202 | 98140 | 1.011 | 32.3% | 32.1% | 1.007 | 1431 |
| Comparative Embodiment 3B | 91.2% | 4.8% | 2% | 2% | 96.0% | 0.0% | 2% | 2% | 6.9% | 0% | 103665 | 98140 | 1.056 | 33.3% | 32.1% | 1.038 | 1327 |
| Comparative Embodiment 3C | 86.4% | 9.6% | 2% | 2% | 96.0% | 0.0% | 2% | 2% | 13.5% | 0% | 109776 | 98140 | 1.119 | 34.5% | 32.1% | 1.075 | 1215 |
| *The lithium-rich material is $Li_2MnO_3 \cdot 0.15(LiNi_{0.33}Co_{0.33}Mn_{0.33}O_2)$ | | | | | | | | | | | | | | | | | |

**Experimental Data Analysis and Principles**

1. Effect of the porosity

In the above embodiments, the positive electrode plate includes a first positive electrode film at the waist and a second positive electrode film at the end. The porosity of the waist is greater than the porosity of the first end region and the porosity of the second end region. Experimental results show that the batteries in the embodiments exhibit an improved cycle life.

In Comparative Embodiment 1, the waist region, the first end region, and the second end region possess an equal porosity. Experimental results show that the battery in the comparative embodiment fails to exhibit an improved cycle life.

Without being limited by any theory, the theoretical basis for the positive electrode plate to improve the cycle life of a battery are as follows:

When the cell is working, the expansion degree at the waist region of the cell is greater than the expansion degree at the end region. Consequently, the waist region is squeezed to a higher degree by the battery shell than the end region, and therefore, the return flowability of the electrolyte solution at the waist region is weaker. In addition, the long-term squeezed state deteriorates the porosity of the negative electrode. After the porosity of the negative electrode plate compacted in a long term is reduced, the negative electrode plate is insufficiently infiltrated by the electrolyte solution, and the lithium intercalation kinetics of the negative electrode are worsened. Lithium plating is prone to occur at the center region in the middle and late stages of cycling and lead to failure. Therefore, by adjusting the porosity at the waist region of the positive electrode plate to make the porosity of the waist be greater than the porosity of the first end region and the porosity of the second end region, this application can reserve a space for withstanding compression, and in turn, alleviate a series of adverse effects mentioned above caused by compression of the waist region.

2. Effect of the lithium element concentration gradient

In the above embodiments, the positive electrode plate includes a first positive electrode film at the waist and a second positive electrode film at the end. The first positive electrode film and the second positive electrode film satisfy the following relationship:

$$(P_1 + Q_1) > (P_2 + Q_2).$$

Experimental results show that the batteries in the embodiments exhibit an improved cycle life.

Embodiments 1 to 10 show that, when $(P_1+Q_1)$ is greater than $(P_2+Q_2)$, the value of $(P_1+Q_1):(P_2+Q_2)$ is 1.001 to 1.998, and all the batteries exhibit an improved cycle life. In Comparative Embodiment 1, the battery satisfies $(P_1 + Q_1) = (P_2 + Q_2)$, and the battery exhibits no improved cycle life.

Embodiments 11A to 11B show that, the batteries employ various positive active materials, and, when $(P_1+Q_1)$ is greater than $(P_2+Q_2)$, all the batteries exhibit an improved cycle life. In Comparative Embodiments 2A to 2B, the batteries satisfy $(P_1 + Q_1) = (P_2 + Q_2)$, and the batteries exhibit no improved cycle life.

Embodiments 12 to 19 show that, the batteries employ various first alkali metal ion donating materials, and, when $(P_1+Q_1)$ is greater than $(P_2+Q_2)$, all the batteries exhibit an improved cycle life.

Embodiments 20 to 21 show that, the batteries satisfy $(P_1+Q_1) > (P_2+Q_2)$, $P_1/Q_1 = 20\%$, and $P_2/Q_2 = 2\%$ to 6%, and all the batteries exhibit an improved cycle life.

In Comparative Embodiments 3A to 3C, the first alkali metal ion donating material is replaced by a lithium-rich material. Different from the first alkali metal ion donating material, the lithium-rich material exhibits a first-cycle Coulombic efficiency of 90% or more, and possesses a reversible capacity. In Comparative Embodiments 5 to 7, the batteries fail to exhibit a significantly improved cycle life.

When the positive electrode plate based on the above embodiments is used in a secondary battery, the secondary battery exhibits an improved cycle life. Without being limited by any theory, the reasons for the improved cycle life of the battery are analyzed as follows:

The value of $(P_1+Q_1)$ in the first positive electrode film is relatively large. Because the first positive electrode film is located in the waist region with a relatively high temperature and a relatively high electrochemical activity, the relatively large $(P_1+Q_1)$ value can make up for the capacity loss caused by insufficiency of reversible alkali metal ions arising from a too fast consumption rate of the alkali metal ions in the waist region, and increase the overall cycle life of the cell.

The value of $(P_2+Q_2)$ in the second positive electrode film is relatively small. Because the second positive electrode film is located in the end region with a relatively low temperature and a relatively low electrochemical activity, the relatively small $(P_2+Q_2)$ value reduces the overall cost and avoids the risk of a short circuit caused by metal dendrites on the negative electrode arising from excessive alkali metal ions.

3. Effect of the lithium supplement element

In the above embodiments, the first positive electrode film and the second positive electrode film satisfy the following relationship: $(P_1/Q_1) > (P_2/Q_2)$, and the batteries exhibit an improved cycle life.

Without being limited by any theory, the reasons for the improved cycle life of the battery are analyzed as follows:

The first alkali metal ion donating material and/or the second alkali metal ion donating material play different roles during operation of the battery. The alkali metal ions donated by the first alkali metal ion donating material are used for compensating for the consumption of the alkali metal ions during the lifespan of the battery, for example, the consumption in an initial film-forming reaction, and the consumption in a reparative film-forming reaction during cycling/storage. The alkali metal ions donated by the second alkali metal ion donating material is used for reversible deintercalation/electrochemical reaction in the positive and negative electrode materials. Because the inherent film-forming consumption is compensated for by the first alkali metal ions, more reversible alkali metal ions are available for providing electrochemical energy. The value of $(P_1/Q_1)$ in the first positive electrode film is relatively large. Because the first positive electrode film is located in the waist region with a relatively high temperature and a relatively high electrochemical activity, the relatively large $(P_1/Q_1)$ value can make up for the capacity loss caused by insufficiency of reversible alkali metal ions arising from a too fast consumption rate of the alkali metal ions in the waist region, and increase the overall cycle life of the cell.

The value of $(P_2/Q_2)$ in the second positive electrode film is relatively small. Because the second positive electrode film is located in the end region with a relatively low temperature and a relatively low electrochemical activity, the relatively small $(P_2/Q_2)$ value reduces the overall cost and avoids the risk of a short circuit caused by metal dendrites on the negative electrode arising from excessive alkali metal ions.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Claims**

1. A positive electrode plate applicable to a jelly-roll cell, comprising a waist region close to a waist and an end region far away from the waist, wherein

   the waist region comprises a first positive electrode film, and the end region comprises a second positive electrode film; and
   a porosity of the first positive electrode film is greater than a porosity of the second positive electrode film.

2. A positive electrode plate applicable to a stacked type cell, comprising a center region close to a center and an edge region far away from the center, wherein

   the center region comprises a first positive electrode film, and the edge region comprises a second positive electrode film; and
   a porosity of the first positive electrode film is greater than a porosity of the second positive electrode film.

3. The positive electrode plate according to any one of claims 1 to 2, wherein a ratio of the porosity of the first positive electrode film to the porosity of the second positive electrode film is (1.003 to 3): 1.

4. The positive electrode plate according to any one of claims 1 to 3, wherein

   a first alkali metal ion donating material and/or a second alkali metal ion donating material is distributed in the first positive electrode film, the first alkali metal ion donating material possesses an irreversible capacity, the second alkali metal ion donating material possesses a reversible capacity, and, in the first positive electrode film, the first alkali metal ion donating material provides $P_1$ ppm alkali metal ions, and the second alkali metal ion donating material provides $Q_1$ ppm alkali metal ions;
   a first alkali metal ion donating material and/or a second alkali metal ion donating material is distributed in the second positive electrode film, the first alkali metal ion donating material possesses an irreversible capacity, the second alkali metal ion donating material possesses a reversible capacity, and, in the second positive electrode film, the first alkali metal ion donating material provides $P_2$ ppm alkali metal ions, and the second alkali metal ion

donating material provides $Q_2$ ppm alkali metal ions; and
the first positive electrode film and the second positive electrode film satisfy the following relationship:

$$(P_1 + Q_1) > (P_2 + Q_2),$$

wherein

$$P_1 > 0,\ P_2 \geq 0,\ Q_1 > 0,\ Q_2 > 0.$$

5. The positive electrode plate according to any one of claims 3 to 4, wherein the first positive electrode film and the second positive electrode film satisfy the following relationship: $(P_1/Q_1) > (P_2/Q_2)$.

6. The positive electrode plate according to any one of claims 3 to 5, **characterized by** one or more of the following features:

(1) a value of $(P_1/Q_1)$ is 0.1% to 70%;
(2) a value of $(P_2/Q_2)$ is 0 to 70%; and
(3) a value of $(P_1/Q_1)$ - $(P_2/Q_2)$ is 0.1% to 60%.

7. The positive electrode plate according to any one of claims 3 to 6, **characterized by** one or more of the following features:

$$(1)\ P_1 + Q_1 = 40000\ \text{ppm to }180000\ \text{ppm};$$

$$(2)\ P_2 + Q_2 = 40000\ \text{ppm to }180000\ \text{ppm};$$

and

$$(3)\ (P_1 + Q_1)\text{: }(P_2 + Q_2) = (1.001\text{ to }2)\text{: }1.$$

8. The positive electrode plate according to any one of claims 1 and 3 to 7, **characterized by** one or more of the following features:

(1) the waist region is a strip-shaped region distributed along a length direction of the positive electrode plate;
(2) the end region is a strip-shaped region distributed along the length direction of the positive electrode plate;
(3) a width of the waist region is 0.05D to 0.95D, and D is a total width of an active material region on the positive electrode plate;
(4) a width of the end region is 0.05D to 0.95D, and D is the total width of the active material region on the positive electrode plate;
(5) a total area of the waist region accounts for 5% to 95%, and optionally 50% to 95%, of a total area of the active material region on the positive electrode plate; and
(6) a total area of the end region accounts for 5% to 95%, and optionally 5% to 50%, of the total area of the active material region on the positive electrode plate.

9. The positive electrode plate according to any one of claims 2 and 3 to 7, **characterized by** one or more of the following features:

(1) the center region is a circle, ellipse, polygon, or a similar figure that, in each case, is centered on a center of the positive electrode plate;
(2) the edge region is an annular region distributed along an edge of the positive electrode plate;
(3) a total area of the center region accounts for 5% to 95%, and optionally 50% to 95%, of a total area of the active material region on the positive electrode plate; and
(4) a total area of the edge region accounts for 5% to 95%, and optionally 5% to 50%, of the total area of the active material region on the positive electrode plate.

10. The positive electrode plate according to any one of claims 1 to 9, wherein the first alkali metal ion donating material comprises one or more of: an alkali metal nitride, an alkali metal oxide, a composite of an alkali metal oxide and a transition metal, an alkali metal peroxide, an excessively alkali-metalized alkali metal oxide, or an alkali metal oxycarbide.

11. The positive electrode plate according to claim 10, **characterized by** one or more of the following features:

   (1) the alkali metal nitride is $A_3N$;
   (2) the alkali metal oxide is $A_2O$;
   (3) the composite of an alkali metal oxide and a transition metal is $A_2O/M$;
   (4) the alkali metal peroxide is $A_2O_2$;
   (5) the excessively alkali-metalized alkali metal oxide is $A_2NiO_2$ or $A_5FeO_4$; and
   (6) the alkali metal oxycarbide is selected from $A_2C_2O_4$, $A_2C_4O_4$, $A_2C_3O_5$, or $A_2C_4O_6$, wherein

      A is an alkali metal element; and
      M is a transition metal element.

12. The positive electrode plate according to any one of claims 1 to 11, wherein the second alkali metal ion donating material comprises one or more of:

   (1) an alkali-metal-ion active material of a layered structure for a secondary battery;
   (2) an alkali-metal-ion active material of an olivine structure for a secondary battery;
   (3) an alkali-metal-ion active material of a spinel structure for a secondary battery; or
   (4) a Prussian blue alkali-metal-ion active material for a secondary battery.

13. The positive electrode plate according to any one of claims 1 to 12, wherein the alkali metal is selected from lithium, sodium, or a combination thereof.

14. The positive electrode plate according to any one of claims 1 to 13, wherein the positive electrode plate comprises a waist region and two end regions, the waist region is located between the two end regions, the waist region comprises a first positive electrode film, and each of the two end regions comprises a second positive electrode film.

15. A secondary battery, comprising the positive electrode plate according to any one of claims 1 to 14.

16. An electrical device, comprising the secondary battery according to claim 15.

FIG. 1

FIG. 2

FIG. 3

FIG. 4

<u>**5**</u>

FIG. 5

<u>5</u>

53

52

52

51

FIG. 6

**4**

**5  5  5**

FIG. 7

**1**

FIG. 8

FIG. 9

FIG. 10

## INTERNATIONAL SEARCH REPORT

| International application No. |
|---|
| **PCT/CN2022/104156** |

**A. CLASSIFICATION OF SUBJECT MATTER**

H01M 4/13(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 正极, 阴极, 中心, 中部, 端部, 边缘, 第一, 第二, 区域, 活性材料, 活性物质, 孔隙率, 空隙率, 孔率, 容量, 补锂, battery, cell, positive, cathode, center, centre, middle, end, edge, first, second, area, active, material, porosity, capacity, lithium, supplement

**C. DOCUMENTS CONSIDERED TO BE RELEVANT**

| Category* | Citation of document, with indication, where appropriate, of the relevant passages | Relevant to claim No. |
|---|---|---|
| X | CN 111540910 A (JIANGSU TAFEL NEW ENERGY TECHNOLOGY CO., LTD. et al.) 14 August 2020 (2020-08-14)<br>  description, paragraphs 0005-0050 and 0161, and figure 1 | 1-3, 8, 9, 14-16 |
| Y | CN 111540910 A (JIANGSU TAFEL NEW ENERGY TECHNOLOGY CO., LTD. et al.) 14 August 2020 (2020-08-14)<br>  description, paragraphs 0005-0050 and 0161, and figure 1 | 4-16 |
| Y | CN 113140695 A (ZHUHAI COSMX BATTERY CO., LTD.) 20 July 2021 (2021-07-20)<br>  description, paragraphs 0004-0037, and figure 1 | 4-16 |
| Y | CN 110993933 A (ZHAOQING AOYOU POWER BATTERY CO., LTD.) 10 April 2020 (2020-04-10)<br>  description, paragraphs 0004-0036 | 4-16 |
| X | JP 2022038871 A (PRIMEARTH EV ENERGY CO., LTD.) 10 March 2022 (2022-03-10)<br>  description, paragraphs 0008-0040 and 0066-0069, and figure 14 | 1-3, 8, 9, 14-16 |
| Y | JP 2022038871 A (PRIMEARTH EV ENERGY CO., LTD.) 10 March 2022 (2022-03-10)<br>  description, paragraphs 0008-0040 and 0066-0069, and figure 14 | 4-16 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 December 2022** | **27 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/104156**

### C.     DOCUMENTS CONSIDERED TO BE RELEVANT

| Category* | Citation of document, with indication, where appropriate, of the relevant passages | Relevant to claim No. |
|---|---|---|
| A | CN 112018397 A (ZHUHAI COSMX BATTERY CO., LTD.) 01 December 2020 (2020-12-01)<br>entire document | 1-16 |

**INTERNATIONAL SEARCH REPORT**
Information on patent family members

International application No.

**PCT/CN2022/104156**

| Patent document cited in search report | | | Publication date (day/month/year) | Patent family member(s) | | | Publication date (day/month/year) |
|---|---|---|---|---|---|---|---|
| CN | 111540910 | A | 14 August 2020 | WO | 2021233366 | A1 | 25 November 2021 |
| | | | | CN | 212062582 | U | 01 December 2020 |
| CN | 113140695 | A | 20 July 2021 | | None | | |
| CN | 110993933 | A | 10 April 2020 | | None | | |
| JP | 2022038871 | A | 10 March 2022 | | None | | |
| CN | 112018397 | A | 01 December 2020 | WO | 2022057666 | A1 | 24 March 2022 |

Form PCT/ISA/210 (patent family annex) (January 2015)